# FASCICULE DE BREVET EUROPEEN

(11) **EP 1 165 413 B1**
(45) Date de publication et mention de la délivrance du brevet: **13.11.2002**
(21) Numéro de dépôt: 00907751.2
(22) Date de dépôt: 02.03.2000
(51) Int. Cl.: B65G 53/46

(54) **ROBINET A TOURNANT SPHERIQUE POUR CONTROLE DE DEBIT SUR PRODUITS PULVERULENTS OU EN GRANULES**
KUGELHAHN ZUR STEUERUNG DES DURCHFLUSSES PULVERISCHER ODER KÖRNIGER PRODUKTE
BALL VALVE FOR CONTROLLING THROUGHPUT ON PULVERULENT OR GRANULATED PRODUCTS

(30) Priorité: 03.03.1999 FR 9902804
(43) Date de publication de la demande: 02.01.2002
(73) Titulaire: Deprat, Charles, 13007 Marseille (FR)
(72) Inventeur: Deprat, Charles, 13007 Marseille (FR)
(74) Mandataire: Roman, Michel
(86) Numéro de dépôt international: FR0000516
(87) Numéro de publication internationale: WO00051923

(56) Documents cités:
- AT-B- 333 561
- DE-A- 2 050 435
- US-A- 1 742 716
- US-A- 3 178 237
- US-A- 4 536 121
- US-A- 4 828 145

## Description

La présente invention a pour objet un robinet à tournant sphérique pour contrôle de débit sur produits pulvérulents ou en granulés.

Il concerne d'une façon générale les industries mettant en oeuvre des processus faisant intervenir des poudres ou des granulés.

Le document US-A-4 828 145 décrit un robinet à tournant sphérique avec les caractéristiques du préambule de la revendication 1.

L'alimentation d'une installation en produits pulvérulents où granuleux, de même que le soutirage de ce type de produits, pose, à ce jour, de nombreux problèmes.

En effet, le transport en continu, par exemple par soufflage d'air ou de gaz dans des canalisations, ne permet pas un contrôle précis du débit et ne peut pas être utilisé lorsque la zone de production doit être totalement isolée de la zone de stockage, ce qui est souvent le cas dans les processus faisant intervenir des réactions chimiques.

Les systèmes discontinus tels que sas ou robinets à godets entraînent, en raison de leur mode de fonctionnement, des limitations souvent très gênantes de la productivité de l'installation et nécessitent généralement plusieurs vannes d'isolation pour permettre la séparation des zones de processus et de stockage.

Le dispositif selon la présente invention a pour objectif de remédier à ces inconvénients. Il permet en effet avec un seul appareil d'assurer non seulement le dosage à débit variable, sensiblement en continu, de produits pulvérulents ou en granulés, mais également l'isolation parfaite entre la zone de process et la zone de stockage, tout en présentant une étanchéité parfaite aux gaz, aussi bien entre les conduits amont et aval, qu'entre l'intérieur et l'extérieur du dispositif.

Il est constitué d'un robinet équipé d'un tournant sphérique comportant une série d'encoches périphériques assez nombreuses pour assurer un débit sensiblement continu à tous les régimes d'utilisation et dont la forme est déterminée pour empêcher toute communication entre l'intérieur et l'extérieur des sièges d'étanchéité, le tournant étant entraîné par un moteur à vitesse variable piloté de manière à pouvoir contrôler de façon précise le débit de transfert.

Sur les dessins annexés, donnés à titre d'exemples non limitatif de formes de réalisation de l'objet de l'invention:
la figure 1 est une coupe passant par l'axe d'écoulement et représentant le dispositif dans son ensemble,
la figure 2 représente le tournant sphérique en perspective axonométrique.
la figure 3 est une coupe partielle à une échelle différente, suivant les flèches F1 de la figure 1,
la figure 4 est un agrandissement du détail D1 de la figure 3
et la figure 5 est une coupe partielle suivant les flèches F1 de la figure 1 d'une variante d'exécution comportant un système de soufflage destiné à vider les encoches périphériques. 1

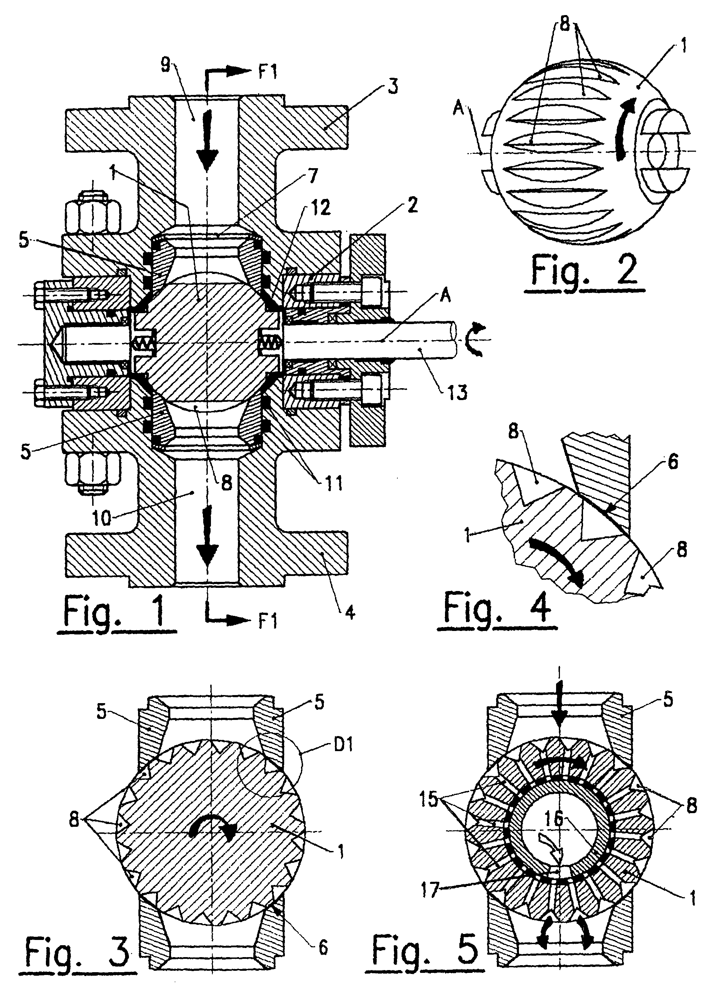

Le dispositif, figures 1 à 4, est constitué d'un tournant sphérique 1 monté dans un corps 2 de robinet de type connu portant deux entretoises brides 3, 4 destinées à être raccordées respectivement sur les tuyauteries amont et aval de transport des produits.

Chacune des entretoises brides 3, 4 comporte un siège 5 creux à portée 6 sphérique plaquée contre le tournant 1 par un élément élastique 7 de poussée.

Le tournant sphérique 1 comporte à sa périphérie une série d'encoches 8 à section en V parallèles à l'axe de rotation A du tournant et dont le rôle est d'assurer un acheminement contrôlé du produit du conduit amont 9 au conduit aval 10.

Les dimensions des encoches 8 ainsi que la largeur des portées 6 des sièges 5 sont déterminées de manière à ce que, quelle que soit la position d'une encoche, elle ne puisse à aucun moment faire communiquer le volume du conduit amont 8 et l'intérieur du robinet.

L'étanchéité entre les zones de passage du produit à véhiculer et l'extérieur du dispositif est assurée par des joints toriques 11 entre les sièges 5 et les brides 3, 4. En outre, des demi-coquilles 12 anti-rétention appliquées contre le tournant sphérique 1 par les entretoises brides 3, 4 empêchent la pénétration du produit pulvérulent dans le corps 2 du robinet en réduisant le volume mort intérieur de celui-ci.

Le contrôle rigoureux du débit est obtenu grâce à un moteur à vitesse variable (non représenté) entraînant l'arbre de commande 13 du tournant sphérique 1, et associé à un système de pilotage permettant de fixer à tout moment le nombre de tours par unité de temps du tournant. La conception de l'appareil fait que chaque encoche est totalement remplie à l'amont, la quantité de produit transférée à chaque tour étant par conséquent exactement égale au nombre d'encoches porté par le tournant multiplié par le volume unitaire de l'une d'elles.

Le nombre d'encoches 8 est optimisé de manière à assurer un débit sensiblement continu.

L'entraînement des produits en poudre ou granulés en aval du dispositif peut être provoqué par un système de soufflage d'air ou de gaz à partir du tournant sphérique 1 comportant des canaux 15 vers chacune des encoches 8 et agencé de façon à ce que l'air ou le gaz ne puisse être insufflé à un instant donné que dans les encoches en communication avec le conduit aval 10.

Pour obtenir ce résultat, le tournant sphérique 1 est monté sur un cylindre fixe 16 alimenté par la source d'air ou de gaz et comportant une ouverture 17 dirigée vers le conduit aval 10, les canaux 15 débouchant sur la paroi interne du tournant en contact avec le cylindre fixe (figure 5).

Le positionnement des divers éléments constitutifs donne à l'objet de l'invention un maximum d'effets utiles qui n'avaient pas été, à ce jour, obtenus par des dispositifs similaires.

## Revendications

1. Robinet à tournant sphérique pour contrôle de débit sur produits pulvérulents ou en granulés, destiné d'une façon générale aux industries mettant en oeuvre des processus faisant intervenir des poudres ou des granulés, ledit robinet comportant un corps (2) de type connu portant deux entretoises brides (3, 4) destinées à être raccordées respectivement sur les tuyauteries amont et aval de transport des produits et un tournant sphérique (1) assurant l'acheminement contrôlé du produit depuis le conduit amont (9) vers le conduit aval (10) grâce à une séries d'encoches (8) périphériques en nombre suffisant pour assurer un débit sensiblement continu du produit à transférer à tous les régimes d'utilisation,
**caractérisé en ce que** lesdites encoches ont une section en "V" et sont parallèles à l'axe de rotation (A) du tournant sphérique (1), leur forme étant déterminée pour empêcher toute communication entre les volumes situés de part et d'autre de la portée (6) du siège (5) d'étanchéité de chaque entretoise bride (3, 4).

2. Robinet à tournant sphérique selon la revendication 1, se caractérisant par le fait que l'arbre de commande (13) du tournant sphérique (1) est entraîné par un moteur à vitesse variable associé à un système de pilotage permettant de fixer à tout moment le nombre de tours par unité de temps du tournant sphérique (1).

3. Robinet à tournant sphérique selon l'une quelconque des revendications précédentes, se caractérisant par le fait qu'il est agencé de manière à ce que chaque encoche (8) soit totalement remplie à l'amont, de façon à ce que la quantité de produit transférée à chaque tour soit exactement égale au nombre d'encoches porté par le tournant sphérique (1) multiplié par le volume unitaire de l'une d'elles.

4. Robinet à tournant sphérique selon l'une quelconque des revendications précédentes, se caractérisant par le fait que les siège (5) d'étanchéité ont une portée (6) sphérique plaquée contre le tournant sphérique (1) par un élément élastique (7) de poussée, la largeur de ladite portée étant déterminée de manière à ce que, quelle que soit la position d'une encoche (8), elle ne puisse à aucun moment faire communiquer le volume du conduit amont (8) et l'intérieur du robinet.

5. Robinet à tournant sphérique selon l'une quelconque des revendications précédentes, se caractérisant par le fait qu'il comporte des demi-coquilles (12) anti-rétention appliquée contre le tournant sphérique (1) par les entretoises brides (3, 4) et agencée de manière à empêcher toute pénétration du produit véhiculé dans le corps (2) du robinet en réduisant le volume mort intérieur dudit robinet.

6. Robinet à tournant sphérique selon l'une quelconque des revendications précédentes, se caractérisant par le fait que l'éjection des produits en poudre ou granulés en aval est provoqué par un système de soufflage à partir du tournant sphérique (1) comportant des canaux vers chacune des encoches, ledit système étant agencé de façon à ce que seules les encoches en communication avec le conduit aval (10) soient en communication à un instant donné avec la source d'air ou de gaz.

7. Robinet à tournant sphérique selon la revendication 6, se caractérisant par le fait que le tournant sphérique (1) est monté sur un cylindre fixe (16) alimenté par une source d'air ou de gaz et comportant une ouverture (17) dirigée vers le conduit aval (10), les canaux (15) débouchant sur la paroi interne du tournant sphérique en contact avec ledit cylindre fixe.

## Patentansprüche

1. Kugelhahn zur Steuerung des Durchsatzes von pulverförmigen Stoffen oder Granulaten, bestimmt für industrielle Anwendungen, bei denen Pulver oder Granulate zum Einsatz kommen, dessen Gehäuse (2) von bekannter Art ist und zwei Stützflansche (3, 4) besitzt, die jeweils an die Ein- und Austrittsleitung des zu transportierenden Produkts angeschlossen werden, sowie einen kugelförmigen Hahnkörper (1), der dank der in auseichender Anzahl auf dem Umfang vorhandenen Aussparungen (8) die gesteuerte Weiterleitung des Produkts von der Eintrittsleitung (9) an die Austrittsleitung (10) ermöglicht und einen praktisch kontinuierlichen Durchfluss des zu transportierenden Produkts bei allen vorgesehenen Förderleistungen gewährleistet,
**gekennzeichnet dadurch, dass** diese Aussparungen einen V-förmigen Querschnitt aufweisen und parallel zur Drehachse (A) des Hahnkörpers (1) angeordnet sind, wobei ihre Form so gewählt ist, dass die Volumina auf jeder Seite der Auflagefläche (6) des abdichtenden Sitzstücks (5) jedes Stützflanschs (3, 4) in keinem Fall miteinander kommunizieren.

2. Kugelhahn gemäß Anspruch 1, **gekennzeichnet dadurch, dass** die Welle (13) des kugelförmigen Hahnkörpers (1) von einem Motor mit variabler Drehzahl angetrieben wird, dem ein Steuerungssystem zugeordnet ist, mit dem die Anzahl der Umdrehungen des kugelförmigen Hahnkörpers (1) pro Zeiteinheit jederzeit vorgegeben werden kann.

3. Kugelhahn gemäß einem der vorstehenden Ansprüche, **gekennzeichnet dadurch, dass** er so gestaltet ist, dass jede Aussparung (8) zufuhrseitig völlig gefüllt wird, so dass die bei jeder Umdrehung transportierte Menge des Stoffes exakt gleich der Anzahl der Aussparungen in dem Hahnkörper (1) multipliziert mit dem Volumen einer einzelnen Aussparung ist.

4. Kugelhahn gemäß einem der vorstehenden Ansprüche, **gekennzeichnet dadurch, dass** die dichtenden Sitzstücke (5) eine sphärische Auflagefläche besitzen, die von einem elastischen Druckelement (7) an den Hahnkörper (1) angepresst wird, wobei die Breite dieser Auflagefläche so gewählt ist, dass eine-Aussparung (8) in keiner Position und zu keiner Zeit eine Kommunikation der eintrittsseitigen Leitung (8) mit dem Innenraum des Kugelhahns ermöglicht.

5. Kugelhahn gemäß einem der vorstehenden Ansprüche, **gekennzeichnet dadurch, dass** er Halbschalen (12) zur Verhinderung von Restmengen besitzt, die von den Stützflanschen (3, 4) gegen den Hahnkörper (1) gedrückt werden und so gestaltet sind, dass ein Eindringen des transportierten Stoffes in das Hahngehäuse (2) verhindert wird, indem das innere Totvolumen des Kugelhahns verringert wird.

6. Kugelhahn gemäß einem der vorstehenden Ansprüche, **gekennzeichnet dadurch, dass** der Ausstoß des pulver- oder granulatförmigen Stoffes in die ausgangsseitige Leitung mit Hilfe eines Blassystems vom Hahnkörper (1) aus durch Kanäle in jeder Ausnehmung erfolgt, wobei das Blassystem so gestaltet ist, dass nur die zur Ausgangsleitung (10) hin offenen Ausnehmungen zu einem bestimmten Zeitpunkt mit der Luft- oder Gasquelle in Verbindung stehen.

7. Kugelhahn gemäß Anspruch 6, **gekennzeichnet dadurch, dass** der Kugelkörper (1) auf einem nicht beweglichen Zylinder (16) montiert ist, der an eine Luft- oder Gasquelle angeschlossen ist und eine in Richtung Austrittsleitung (10) weisende Öffnung (17) sowie Kanäle (15) besitzt, die auf der Innenseite des Hahnkörpers austreten, der mit dem nicht beweglichen Zylinder in Kontakt steht.

## Claims

1. Ball valve for controlling the flow of products in powder or pellet form, intended in a general way for industries with processes using powders or pellets, the aforementioned valve comprising a body (2) of known type with two support flanges (3, 4) for connecting on product conveying piping upstream and downstream and a spherical plug (1) ensuring the controlled routing of the product from upstream pipe (9) towards downstream pipe (10) thanks to a series of peripheral notches (8) in sufficient number to ensure an appreciably continuous flow of the product to be transferred in all the utilisation modes,
**characterized in that** the said notches have a "V" section and are parallel to the axis of rotation (A) of spherical plug (1), their form being determined to prevent any communication between the volumes situated on either side of bearing zone (6) of seat (5) of each support flange (3, 4).

2. Ball valve according to claim 1, **characterized in that** stem (13) of spherical plug (1) is driven by a variable speed motor associated with a pilot control system allowing the number of spherical plug (1) turns per unit of time to be set.

3. Ball valve according to any one of the aforesaid claims, **characterised in that** it is arranged so that each notch (8) is entirely filled upstream, in such a way that the quantity of product transferred on each rotation is exactly equal to the number of notches borne by spherical plug (1) multiplied par the unit volume of one of them.

4. Ball valve according to any one of the aforesaid claims, **characterized in that** seal seats (5) have a spherical zone (6) bearing on spherical plug (1) by a flexible thrust device (7), the width of the said zone being determined so that, whatever the position of notch (8), it prevents at all times the upstream volume of pipe (8) communicating with the inside of the valve.

5. Ball valve according to any one of the aforesaid claims, **characterized in that** it has anti-retention half-bodies (12) applied against spherical plug (1) by the support flanges (3, 4) and arranged so as to prevent any product penetrating body (2) of the valve by reducing the dead volume inside the said valve.

6. Ball valve according to any one of the aforesaid claims, **characterized in that** the upstream products are ejected from spherical plug (1) by a blowing system and comprising channels towards each notch, the said system being organised so that only the notch in communication with the downstream pipe (10) communicates with the air or gas source at a given instant.

7. Ball valve according to claim 6, **characterized in that** spherical plug (1) is fitted on a fixed cylinder (16) supplied by an air or gas source and comprising an opening (17) directed towards downstream pipe (10), channels (15) opening onto the internal wall of the spherical plug in contact with the said fixed cylinder.
